(19) **Europäisches Patentamt / European Patent Office / Office européen des brevets**

(11) **EP 4 591 588 B1**

(12) **FASCICULE DE BREVET EUROPEEN**

(45) Date de publication et mention de la délivrance du brevet:
**29.07.2026 Bulletin 2026/31**

(21) Numéro de dépôt: **23772905.8**

(22) Date de dépôt: **21.09.2023**

(51) Classification Internationale des Brevets (IPC):
*H04N 23/698* (2023.01)    *H04N 23/70* (2023.01)
*H04N 23/73* (2023.01)

(52) Classification Coopérative des Brevets (CPC):
**H04N 23/73; H04N 23/698; H04N 23/70**

(86) Numéro de dépôt international:
**PCT/EP2023/076159**

(87) Numéro de publication internationale:
**WO 2024/062079 (28.03.2024 Gazette 2024/13)**

(54) **PROCÉDÉ DE TRAITEMENT DE PARAMÉTRAGE, DISPOSITIF, SYSTÈME ET PROGRAMME CORRESPONDANT**

PARAMETRISIERUNGSVERARBEITUNGSVERFAHREN, VORRICHTUNG, SYSTEM UND ENTSPRECHENDES PROGRAMM

PARAMETERIZATION PROCESSING METHOD, DEVICE, SYSTEM AND CORRESPONDING PROGRAM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.09.2022 FR 2209634**

(43) Date de publication de la demande:
**30.07.2025 Bulletin 2025/31**

(73) Titulaire: **VIAMETRIS**
**53950 Louverné (FR)**

(72) Inventeur: **DEVILLY, Nicolas**
**53970 MONTIGNE LE BRILLANT (FR)**

(74) Mandataire: **Vidon Brevets & Stratégie**
**16B, rue de Jouanet**
**35700 Rennes (FR)**

(56) Documents cités:
**US-A1- 2022 086 988**

## Description

### 1. Domaine technique

La divulgation se rapporte au domaine de la cartographie mobile. Plus précisément, la divulgation se rapporte au domaine de la captation et du traitement de données issues de systèmes de cartographie mobile. Plus particulièrement encore, la divulgation concerne le paramétrage de captures d'images issues d'un système de cartographie mobile muni d'au moins trois dispositifs de prise de vue.

### 2. Technique antérieure

Des systèmes de cartographie mobile sont développés depuis de nombreuses années. De tel systèmes permettent d'obtenir des données tridimensionnelles relativement aux environnements cartographiés. Diverses technologies peuvent être mise en œuvre au sein d'un système de cartographie mobile pour obtenir ces données tridimensionnelles. Notamment, il est possible d'utiliser caméras panoramiques. Les caméras panoramiques sont souvent configurées sur le même principe : un nombre prédéterminé de dispositifs de prise de vues individuels (des caméras) sont répartis sur une demi-sphère, par exemple six, cinq d'entre eux sont placés sur un même plan horizontal en cercle et le sixième est orienté vers le haut pour compléter le panorama.

Bien qu'intéressante d'un point de vue théorique, ces caméras panoramiques, qui embarquent plusieurs dispositifs de prise de vue individuels, souffrent de plusieurs problèmes. En effet, en premier lieu, il est nécessaire de valider la synchronisation temporelle de plusieurs dispositifs de prise de vue individuels, de sorte à assurer que les images soient captées au même moment par les dispositifs de prise de vue. Pour ce faire, une solution consiste à fixer des valeurs de gain et de temps d'exposition pour les dispositifs de prise de vue de manière arbitraire. Cependant, la qualité des images s'en ressent nettement, particulièrement dans des situations de faible ou de forte luminosité par exemple. Une autre solution consiste à utiliser un calculateur annexe au système pour régler ce problème d'adaptabilité synchronisé. Par exemple, la société Insta360 (Insta360, 2022) embarque un calculateur GPU puissant pour traiter les images des dispositifs de prise de vue embarques. Ce calculateur contrôle les flux et homogénéise les paramètres des dispositifs de prise de vue via un traitement d'image embarqué. Le principe est proche du mode « automatique » des caméras numériques, il consiste à utiliser la prise d'image courante pour estimer les nouveaux paramètres de l'image suivante. Cette solution cependant est gourmande en énergie et par ailleurs alourdit l'équipement qui est porté, par exemple par un opérateur à pied : Il faut embarquer, dans le système, le calculateur, ainsi qu'une alimentation électrique dimensionnée pour ce calculateur. Par ailleurs, quels que soient les algorithmes choisis (FLIR, 2017) ou (Bernacki, 2020), le principe général reste le même et la latence sur l'adaptation des paramètres est inhérente à ce principe qui consiste à asservir les paramètres sur la prise d'image. Un changement rapide de condition lumineuse (passage dans un tunnel, changement brutal des conditions météorologiques) entraine un temps d'adaptation se traduisant par des images inexploitables le temps de converger vers les bons paramètres.

Il est donc nécessaire de prévoir une solution permettant tout à la fois de déterminer précisément les conditions de prise de vue du dispositif de cartographie mobile au cours de son déplacement tout en évitant les problématiques posées par les solutions de l'art antérieur.

Le document US 2022/086988 A1 décrit un système d'éclairage comprenant un dispositif d'émission lumineuse à variation angulaire AVLED, apte à ajuster individuellement le flux lumineux et, éventuellement, le contenu spectral dans une pluralité de compartiments angulaires, ainsi qu'au moins un capteur de lumière, notamment un capteur d'imagerie, positionné de manière à recevoir la lumière provenant de l'environnement. Le dispositif émet un flux lumineux dans différents compartiments angulaires et le capteur fournit des informations relatives à la lumière issue de ces compartiments et réfléchie par l'environnement dans une ou plusieurs zones spatiales, ces informations pouvant inclure des données spectrales. Ce document prévoit en outre des routines de mesure comprenant un balayage angulaire afin de mesurer ou d'estimer des propriétés lumineuses et, le cas échéant, de générer une cartographie du champ lumineux, puis d'ajuster le flux émis dans un ou plusieurs compartiments angulaires de manière à atteindre une propriété cible dans les zones considérées, par exemple une luminance, une luminance ou une irradiance, tout en pouvant tenir compte de propriétés colorimétriques ou spectrales des surfaces et de la lumière réfléchie.

### 3. Résumé de l'invention

La technique conçue par les inventeurs a été testée pour répondre au moins en partie aux problématiques posées par l'art antérieur. Ainsi, la présente divulgation se rapporte à un Procédé de paramétrage d'un système comprenant un ensemble de N dispositifs de prise de vue tel que défini dans la revendication 1 ci jointe.

Selon un autre aspect, l'invention se rapporte également à un système de caméra panoramique comprenant un ensemble de N dispositifs de prise de vue tel que défini dans la revendication 7 ci jointe.

Selon une implémentation préférée, les différentes étapes des procédés selon la présente divulgation sont mises en œuvre par un ou plusieurs logiciels ou programmes d'ordinateur tel que défini dans la revendication 8 ci jointe.

En conséquence, la présente technique vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La présente technique vise aussi un support d'informations lisible par un processeur de données, et comportant des instructions d'un programme tel que mentionné ci-dessus.

Le support d'informations peut être n'importe quelle entité ou terminal capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique, optique et/ou sonore, qui peut être acheminé via un câble électrique ou optique, par radio ou par d'autres moyens. Le programme selon la présente technique peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un exemple de réalisation, la présente technique est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la présente technique.

## 4. Brève description des dessins

D'autres buts, caractéristiques et avantages de la technique décrite apparaîtront plus clairement à la lecture de la description suivante, donnée à titre de simple exemple illustratif, et non limitatif, en relation avec les figures, parmi lesquelles :

- la figure 1 représente le système de manière schématique ;
- la figure 2 représente le système dans lequel des dispositifs de flash sont adjoints ;
- la figure 3 représente le système pour une synchronisation avec une fréquence de lumière ambiante ;
- la figure 4 représente le procédé de paramétrage ;
- la figure 5 représente une architecture physique simplifiée d'un dispositif dans lequel les procédés et systèmes précédemment décrits peuvent être mis en œuvre.

## 5. Description détaillée

### 5.1. Principe général

Comme explicité précédemment, le principe général mis en œuvre par les inventeurs consiste à coupler une caméra large champs de vue (i.e. un système comprenant une pluralité de dispositifs de prise de vue individuels placées sur un même plan horizontal) avec une pluralité de capteurs de lumière ambiante, qui sont également placés sur un même plan horizontal. Les capteurs de luminosité et les dispositifs de prise de vue individuels sont gérés à l'aide d'un microcontrôleur. Ce microcontrôleur reçoit, en temps réel, les mesures en provenance des capteurs de luminosité. Ce microcontrôleur commande, également en temps réel, le déclenchement des dispositifs de prise de vue individuels en fonction des mesures relevées depuis les différents capteurs de luminosité. Selon la présente, le système est doté d'au moins trois capteurs de luminosité. Dans le cas où le système de caméras est panoramique (champ de vue de 360°, les dispositifs de prise de vue individuels étant placés sur un même plan horizontal en cercle), au moins trois capteurs de luminosité sont associés pour couvrir un champ de vue panoramique (avec un champ de vue approximatif de 120° pour chaque capteur de luminosité situé derrière un optique standard, également placé sur un même plan horizontal en cercle).

Les capteurs de luminosité sont utilisés pour récupérer une mesure absolue des caractéristiques de l'environnement en termes de luminosité, de température de couleur d'éclairage, de scintillement (éclairage artificiel au néon par exemple). Dans un exemple de réalisation, chaque capteur de luminosité peut fournir des mesures sur six canaux de lumière ambiante simultanés permettant de calculer l'éclairement, la chromaticité et la température de couleur (un canal large bande (*Wideband*), un canal « *Clear* », un canal « *Leakage* », trois canaux (R/G/B)).

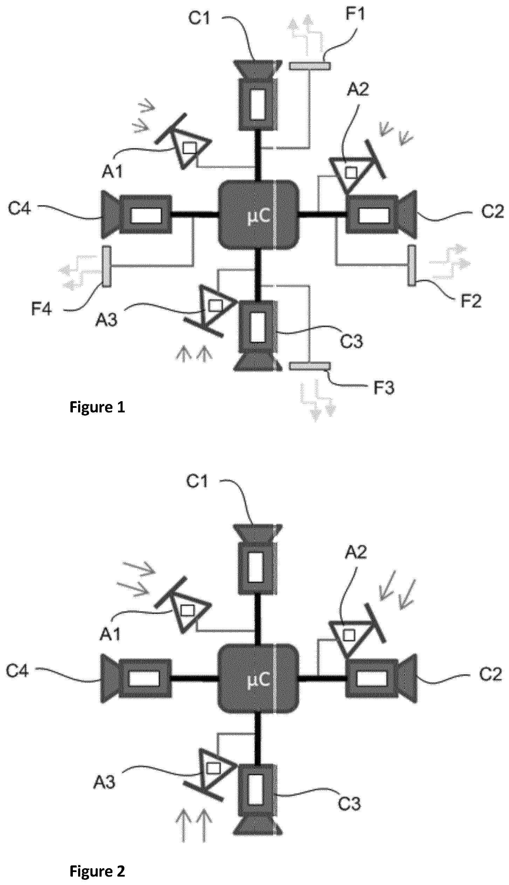

La figure 1 schématise le système qui a été développé par les inventeurs. Une pluralité de dispositifs de prise de vue individuels (quatre sont représentées, C1, C2, C3, C4) est utilisée pour effectuer une prise de vue panoramique, dans un système de prise de vue panoramique. Ces dispositifs de prise de vue individuels sont physiquement alignés, dans un même plan horizontal, et leur nombre est fonction de l'angle de vue de chacun d'entre eux (dans l'exemple présenté dans la figure 1, l'angle de vue serait d'au moins 90° par dispositif de prise de vue individuel, ceux-ci étant orientées de 90° l'un par rapport à l'autre). Les dispositifs de prise de vue individuels sont commandés par un microcontrôleur ($\mu$C) qui est en charge d'une part de fixer les paramètres de prises de vue et d'autre part de déclencher les prises de vue en tant que telle, selon une fréquence prédéterminée. Le flot optique obtenu à partir de ces dispositifs de prise de vue individuels n'est pas traité par le microcontrôleur lui-même. Il est traité par un autre dispositif qui n'est pas l'objet de l'invention. Le système est également muni de capteurs de luminosité (trois sont représentés, A1, A2 et A3). Chaque capteur couvre approximativement un champ de vue de 120°, permettant de couvrir le même champ que les dispositifs de prise de vue individuels.

D'une manière générale, le système, s'il n'est pas panoramique, comprend autant de capteurs nécessaires à une couverture de champ identique à la couverture de champs des dispositifs de prise de vue individuels. Il est possible par exemple de construire un système de prise de vue à 180°, comprenant trois dispositifs de prise de vue individuels et deux ou trois capteurs de luminosité. D'une manière générale également, il y a autant de capteurs de luminosité qu'il y a de dispositifs de prise de vue ou au minimum un capteur de luminosité de moins qu'il y a de dispositifs de prise de vue.

La mesure absolue de la luminance (Cd/m$^2$, W/m$^2$/sr, photons/s/m$^2$/sr) donnée par un capteur de luminosité installé sur le système est linéaire avec la quantité de lumière ambiante. Les inventeurs ont utilisé cette caractéristique pour mettre en œuvre un procédé de paramétrage de prise de vue adapté, permettant de contrer un certain nombre d'inconvénients de l'art antérieur. Ainsi, le microcontrôleur, en récupérant les mesures des capteurs de luminosité effectue des calculs basés sur les valeurs mesurées pour d'obtenir un temps d'exposition unique (mais astucieusement déterminé) pour les dispositifs de prise de vue individuels du système, maximisant la qualité des images et minimisant le temps d'exposition des capteurs de ces dispositifs de prise de vue individuels. Ainsi, par exemple, dans le cas où le temps d'exposition idéal (calculé par le microcontrôleur) dépasse une valeur maximale autorisée (par exemple un seuil limite pour éviter le flou de bougé, configuré au sein du microcontrôleur), le procédé comprend une étape d'ajustement des gains des dispositifs de prise de vue individuels. La mesure de la température de couleur, qui permet également de déduire une valeur absolue pour modifier les paramètres de la balance des blancs de chaque dispositif de prise de vue individuel, est mise en œuvre dans une étape subséquente, pour affiner les paramètres de chaque dispositif de prise de vue individuel. Dans un exemple de réalisation, les différentes mesures des capteurs sont utilisées pour déterminer une moyenne de mesure. Cet exemple de réalisation est orienté vers une prise de vue cadencée et synchronisée de l'ensemble des dispositifs de prise de vue individuels du système. La cadence retenue peut par exemple être de 25 images par seconde. D'autres cadences peuvent être retenues en fonction des conditions de mise en œuvre opérationnelles.

Également en fonction des conditions opérationnelles, et dans un exemple de réalisation complémentaire exposé en figure 2, le système comprend des dispositifs de flash à diode électroluminescente de puissance (quatre sont représentés, F1, F2, F3, F4). Dans un exemple, il y a autant de de dispositifs de flash à diode électroluminescente de puissance qu'il y a de dispositifs de prise de vue individuels dans le système. Ces dispositifs de flash sont donc répartis sur un même plan horizontal, par exemple en cercle, pour produire un éclairage d'appoint pendant la prise de vue réalisée par chaque dispositif de prise de vue individuel. Chaque dispositif de flash est relié au microcontrôleur et reçoit, depuis celui-ci, un signal de déclenchement, selon la même cadence de déclenchement que celle des prises de vue.

Ainsi, le système proposé permet de réduire de manière importante la latence dans l'adaptation des paramètres dans des environnements fortement dynamiques en lumière (entrée ou sortie de tunnel, passage intérieur/extérieur, éclairage artificiel, etc.), et ce en temps réel. Les paramètres sont appliqués immédiatement aux images en cours de captation. Autrement dit, la mise à jour des paramètres est calculée pour l'image en cours d'acquisition et ne n'implique pas, comme dans d'autres systèmes, que les paramètres soient calculés pour l'image suivante en fonction de l'image courante.

De plus, contrairement aux systèmes qui embarquent des processeurs graphiques puissants (GPU) ou des FPGA configurés à façon, la charge de calcul pour la mise en œuvre du procédé décrit est limitée, et ce même lorsque la résolution des dispositifs de prise de vue individuels est augmentée. Ainsi, même avec des solutions embarquant des capteurs de très haute résolution, la solution offerte par le système de l'invention ne pose pas de problème de gestion de grandes quantités de données. De plus, il n'y a pas de développement lourd à chaque changement de référence de dispositif de prise de vue individuel. Alors que dans le cadre d'un module FPGA, le changement des dispositifs de prise de vue individuels implique une refonte totale, nécessitant de nouveau développements sur le FPGA pour s'adapter aux nouvelles résolutions, la solution offerte par l'invention est économe en ressources et ne nécessite pas de refonte du système, mais uniquement, comme cela est explicité par la suite, un paramétrage initial des nouveaux dispositifs de prise de vue individuels à utiliser.

Par ailleurs, comme indiqué précédemment, la balance des blancs est, dans le cas du système proposé, traitée de manière absolue pour chaque dispositif de prise de vue individuel. Alors que les algorithmes de l'art antérieur adaptent les ratios de gain entre les bandes de couleur pour produire des images globalement « blanches » en moyenne (ce qui ne correspond pas forcément à la réalité compte-tenu de la température de l'éclairage extérieur), l'invention traite ce paramètre pour qu'il corresponde à la réalité de l'éclairage du point de vue de chaque dispositif de prise de vue individuel, indépendamment des autres.

Par exemple, dans le cas de prise d'image en intérieur, certaines sources lumineuses comme les éclairages au néon peuvent scintiller du fait de l'alimentation secteur à 50Hz. L'émission lumineuse se retrouve alors à 100Hz, sur chaque crête (positive ou négative) du courant alternatif. Dans le cas de caméra très haute résolution, un flou de bougé peut rapidement présent avec des temps d'exposition relativement court. Une caméra peut en effet exposer sur 2ms et peut alors capter des images successives avec une source lumineuse totalement différente en fonction de la fréquence de prise de vue (produisant un effet stroboscopique). En d'autres termes, le scintillement est décalé par rapport à la prise de vue : la première prise de vue peut être effectuée dans l'intervalle où il n'y a pas de scintillement, entrainant ainsi un « mauvais » calcul du système pour la prise de vue suivante (temps d'exposition trop long), qui peut entrainer une surexposition.

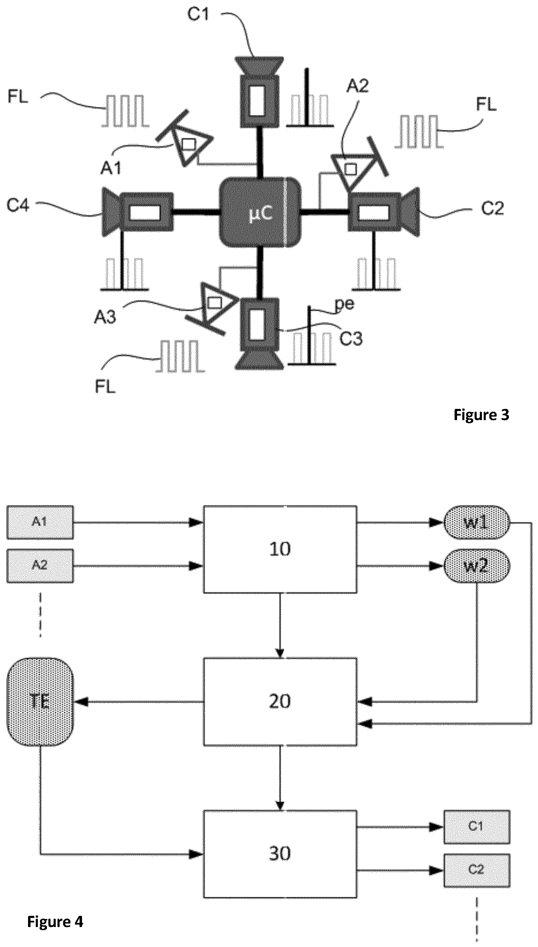

Fort de cette problématique additionnelle, les inventeurs ont, à l'aide du système proposé, mesuré le scintillement ambiant produit par l'éclairage. Le principe en est exposé en figure 3. Cette fréquence (FL), une fois mesurée, est utilisée pour asservir l'ensemble des horloges de déclenchement du microcontrôleur et synchroniser les périodes d'exposition (pe) des dispositifs de prise de vue individuels (C1, ...) sur les périodes d'éclairage de l'environnement, compte tenu de la fréquence (FL) de la lumière ambiante, minimisant la nécessité d'éclairer la scène. S'il advient que l'éclairage de la scène est tout de même nécessaire, le déclenchement des dispositifs de flash de puissance est asservi à la prise de vue, comme cela a été explicité précédemment. Ainsi, la solution apporte :

- Une mesure absolue de la lumière ambiante permettant de conserver une cohérence dans le temps du flux image de tous les dispositifs de prise de vue individuels, en influençant les temps d'exposition, les gains électroniques, les paramètres de balance des blancs ;
- Une synchronisation simultanée de tous les dispositifs de prise de vue individuels sur des paramètres communs ;
- Une réactivité instantanée par rapport aux conditions extérieures de lumière en éliminant les seuils et les filtres des fonctions « automatiques » d'exposition des caméras ;
- Une configuration ajustable et indépendante du matériel (solution évolutive en termes de nombre de caméras et de la résolution des caméras) ;
- Une architecture légère, bas-coût et peu gourmande en ressource de calcul ;
- Une capacité de mesure à haute fréquence décorrélé des temps d'expositions de caméras, pouvant donc contrôler le déclenchement et l'extension automatique de sources lumineuses additionnelles.

Ainsi, en relation avec la figure 4, l'invention se rapporte également à un procédé de paramétrage d'un système comprenant un ensemble de N dispositifs de prise de vue physiquement alignés et répartis dans un même plan horizontal de sorte à couvrir un angle de prise de vue global prédéterminé. Un tel procédé comprend, :

- une étape de mesure (10), à partir d'un ensemble de N-1 capteurs de luminosité (A1, A2, ...) physiquement alignés et répartis dans un même plan horizontal de sorte à couvrir l'angle de prise de vue global prédéterminé, chaque capteur de l'ensemble de capteurs étant individuellement connecté au microcontrôleur ($\mu C$), d'au moins une donnée représentative de la luminance (W1, W2, ...) perçue par chaque capteur de luminosité ;
- une étape de détermination (20), par le microcontrôleur ($\mu C$), à partir des données représentative de la luminosité (W1, W2, ...) perçue par chaque capteur de luminance, d'un temps d'exposition (TE) des N dispositifs de prise de vue ;
- une étape de paramétrage (30) de l'ensemble des N dispositifs de prise de vue, par le microcontrôleur ($\mu C$), auquel chaque dispositif de prise de vue de l'ensemble des N dispositifs de prise de vue est connecté, à l'aide du temps d'exposition (TE).

Ainsi, il est possible, grâce à cette technique, d'obtenir, à peu de frais, un système qui d'une part n'est pas gourmand en énergie, ne nécessite pas de matériels complémentaires couteux et qui produit des prises de vues de qualité égale, quelles que soient les conditions d'éclairage.

5.2. Description d'un exemple de réalisation

Dans cette section, on décrit la mise en œuvre du paramétrage des dispositifs de prise de vue individuels (qui sont par exemple des caméras), en vue de déterminer un temps d'exposition pour une prise de vue individuelles, ainsi qu'une balance des blancs. On suppose que la prise de vue individuelle est réalisée à une certaine fréquence (par exemple vingt-cinq prises de vue par seconde dans un objectif de production d'une flux vidéo, cinq images par seconde dans un objectif de cartographie d'un espace donné). Il est également possible de déterminer qu'autres fréquences d'acquisition d'images en fonction des besoins. Pour la cadence d'acquisition (de prise de vue) requise il est donc nécessaire de fournir, à chaque dispositif de prise de vue, des paramètres d'acquisition a minima selon cette fréquence.

Dans l'exemple d'implémentation présenté ici, un capteur de luminosité fonctionne à 50Hz sur un temps d'exposition de 2ms. L'objectif étant d'homogénéiser les prises d'image des dispositifs de prise de vue, les inventeurs ont décidé d'appliquer les mêmes paramètres à chacun d'entre eux. En revanche, certains paramètres de calibrage (initiaux) rendent chaque dispositif de prise de vue unique. Les inventeurs ont déterminé que, dans le cas d'un ensemble synchronisé de dispositifs de prise de vue fonctionnant à une certaine fréquence d'acquisition d'images (fim), les capteurs de luminosité, qui sont synchronisés sur la même horloge, peuvent optionnellement fonctionner sur une fréquence plusieurs fois supérieure (par exemple 5 à 10 fois supérieure) pour lisser les prises de mesure sur une fenêtre glissante de plusieurs valeurs consécutives.

Pour chaque capteur de luminosité du système, les mesures suivantes sont par exemple exploitées :

- Une mesure d'intensité large bande $mes_W$ (longueur d'onde de 400nm à 950nm), exprimée proportionnellement en lux ;
- Trois mesures $mes_R$, $mes_G$ et $mes_B$ pour déterminer la température de couleur, exprimée proportionnellement en lux.

Comme ces mesures sont réalisées à une fréquence d'horloge dix fois supérieure à celle de l'acquisition d'images, une valeur moyenne est calculée, par capteur $M^i_W$, $M^i_R$, $M^i_G$ et $M^i_B$., « i » représentant l'indice du dispositif de prise de vue (1<=i<=N).

À partir de ces moyennes de mesures, obtenues pour chaque capteur, la détermination du temps d'exposition de dispositifs de prise de vue est mise en œuvre. Plus particulièrement on détermine le temps d'exposition et on ajuste le gain analogique des (capteurs CMOS des) dispositifs de prise de vue.

Selon l'invention, le gain analogique est minimisé pour éliminer le bruit électronique des capteurs CMOS. L'algorithme consiste donc à favoriser le réglage du temps d'exposition (*t*) avant de devoir ajuster le gain (g). Dans le cas d'une application mobile (c'est-à-dire d'un système en mouvement), il est possible de définir une valeur limite d'exposition afin de limiter le flou de bouger. Ce seuil est dénommé $T_{max}$. Ce seuil $T_{max}$.peut également dépendre de la valeur limite d'exposition nécessaire à la tenue de la fréquence d'acquisition en fonction des conditions de mise en œuvre.

La détermination du temps d'exposition (*t*) comprend :

- une étape de calcul d'une valeur compilée $M_W$ des moyennes d'intensité large bande $M^i_W$ ;
- une étape de calcul du temps d'exposition $t_e$ selon la formule suivante :

$$t_e = \begin{cases} t \propto \dfrac{1}{M_W} \ si \ t \ < \ T_{max} \\ T_{max} \ sinon \end{cases}$$

- une étape d'ajustement du gain analogique g, selon la formule suivante, peut ensuite être effectuée :

$$g \propto \begin{cases} 0 \ si \ t \ < \ T_{max} \\ log_2 \left( \dfrac{T_{max}}{M_w} \right) sinon \end{cases}$$

Postérieurement à l'obtention de ces valeurs, principalement du temps d'exposition ($t_e$), l'étape de paramétrage de l'ensemble des *N* dispositifs de prise de vue est effectuée par le microcontrôleur *(μC), auquel chaque* dispositif de prise de vue est connecté. Si la valeur de gain doit également être fixée, le paramétrage du gain *(g)* est également effectué dans cette étape de paramétrage. En fonction des exemples de réalisation, l'étape de calcul de la valeur compilée $M_W$ des moyennes d'intensité large bande $M^i_W$ peut consister, elle-même, en un calcul de moyenne. Auquel cas :

$$M_W = Mean(M_W^i)$$

Dans d'autres conditions opérationnelles, la valeur maximale ou minimale ou toute autre calcul adéquat peut être effectué dans l'objectif d'obtenir une valeur d'intensité valeur compilée $M_W$ commune sur la base de laquelle le calcul du temps d'exposition est effectué.

Postérieurement ou subséquemment au calcul du temps d'exposition, un réglage commun de balance des blancs est également effectué. Le réglage de la réponse en couleur d'une caméra numérique consiste à régler deux ratios dans les paramètres de celle-ci. Ces deux ratios peuvent être différents selon le choix des fabricants. Pour les besoins de la présente, on considère que le dispositif de prise de vue exploite les ratios suivants :

$$r_{G/R} = \frac{G}{R} \; et \; r_{G/B} = \frac{G}{B}$$

Cela signifie qu'il est possible d'ajuster la balance des blancs du dispositif de prise de vue en modifiant le facteur multiplicatif des pixels verts (G) par rapport aux pixels rouges (R) et aux pixels bleus (B). Il est entendu que la réponse d'un premier dispositif de prise de vue dans des conditions spécifiques ne sera pas identique à la réponse d'un deuxième dispositif de prise de vue dans ces mêmes conditions. Un étalonnage est ainsi effectué en amont pour permettre à un deuxième dispositif de prise de vue de fournir la même réponse qu'un autre deuxième dispositif de prise de vue. L'étalonnage est effectué en déterminant deux paramètres $k$ et $b$, pour chaque ratio et pour chaque dispositif de prise de vue. Le microcontrôleur du système comprend donc, en mémoire, pour chaque dispositif de prise de vue, les paramètres $k$ et $b$ nécessaires aux calculs des deux ratios $r_{G/R}$ et $r_{G/B}$ de chaque dispositif de prise de vue, selon la formule :

$$r_{x,y} = k_{x,y} \frac{M_x}{M_y} + b_{x,y}$$

A l'aide des capteurs de luminosité, on calcule, pour chaque capteur, une valeur moyenne $M^i_R$, $M^i_G$ et $M^i_B$., « i » représentant l'indice du dispositif de prise de vue $(1<=i<=N)$.

- La deuxième étape du calcul de la balance des blancs consiste à calculer une valeur compilée $M_X$ des moyennes $M^i_X$, et ce pour chaque composante (R, G, B).

En fonction des exemples de réalisation, l'étape de calcul de la valeur compilée $M_X$ des composantes R, G, B ($M^i_X$) peut consister, elle-même, en un calcul de moyenne. Auquel cas :

$$M_X = Mean(M_X^i)$$

Dans d'autres conditions opérationnelles, la valeur maximale ou minimale ou toute autre calcul adéquat peut être effectué dans l'objectif d'obtenir une valeur compilée $M_X$ commune sur la base de laquelle le calcul des ratios est effectué.

- La troisième étape du calcul de la balance des blancs consiste à calculer les deux ratios $r_{G/R}$ et $r_{G/B}$ de chaque dispositif de prise de vue, selon la formule précédemment présentée :

$$r_{G/R} = k_{G/R} \frac{M_R}{M_G} + b_{G/R}$$

Et

$$r_{G/B} = k_{G/B} \frac{M_B}{M_G} + b_{G/B}$$

Postérieurement à l'obtention de ces ratios, l'étape de paramétrage de l'ensemble des N dispositifs de prise de vue est effectuée par le microcontrôleur $(\mu C)$. A la différence du temps d'exposition $(t_e)$, cependant, chaque dispositif de prise de vue reçoit deux valeurs de ratio qui lui est propre et qui dépendent de l'étalonnage effectué sur le dispositif de prise de vue lors de la construction du système par exemple.

Ainsi, selon l'invention, grâce au couplage effectué entre un microcontrôleur $(\mu C)$, des dispositifs de prise de vue (C1, ...) connectés à ce microcontrôleur $(\mu C)$ et des capteurs de luminosité (A1, ...), il est possible de disposer d'un système efficace et peu cher pour la prise de vue synchronisée, cadencée et dans lequel chaque image de chaque dispositif de prise de vue bénéficie d'une qualité identique aux autres. La logique implantée sur le microcontrôleur $(\mu C)$, est simple à mettre en œuvre, peu gourmande en ressources et ne nécessite donc pas d'alimentation supplémentaire. Le système, au final est peu onéreux et flexible puisqu'il est possible de changer les dispositifs de prise de vue sans changer la logique du microcontrôleur. Seuls des paramètres initiaux (comme les deux paramètres $k$ et $b$) sont mis à jour dans le système.

Quels que soient les modes de réalisation, le paramétrage des dispositifs de prise de vue peut être mis en œuvre en un bloc (i.e. l'ensemble des paramètres est fourni après que tous aient été calculés) ou bien en séquence (chaque paramètre, temps d'exposition, gain, balance des blancs) est fourni au fur et à mesure que les calculs sont effectués. Lorsque tous les paramètres sont fournis, et en fonction de la fréquence de prise de vue (notamment en fonction du nombre d'image par seconde à acquérir, ainsi que de la fréquence de la lumière ambiante par exemple), le microcontrôleur déclenche la prise de vue synchrone des dispositifs de prise de vue. Lorsqu'aucun dispositif de flash n'est mis en œuvre, les mesures en provenance des capteurs peuvent continuer à être obtenues par le microcontrôleur, en parallèle des prises de vues, afin par exemple d'augmenter ou de maintenir la fréquence de prise de vue paramétrée à l'origine.

5.3. Autres caractéristiques et avantages

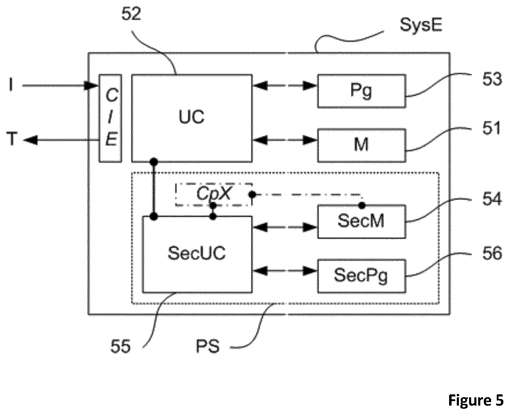

On présente, en relation avec la figure 5, une architecture simplifiée d'un dispositif de cartographie mobile (TProf) apte à effectuer tout ou une partie du traitement tel que présenté précédemment. Un dispositif de cartographie mobile comprend un premier module électronique comprenant une mémoire 51, une unité de traitement 52 équipée par exemple d'un microprocesseur, et pilotée par un programme d'ordinateur 53. Le dispositif de cartographie mobile comprend optionnellement, pour des fonctionnalités de sécurité (par exemple pour éviter le vol de matériels ou la compromission des données stockées), comme la génération de matériels cryptographiques, un deuxième module électronique comprenant une mémoire sécurisée 54, qui peut être fusionnée avec la mémoire 51 (comme indiqué en pointillés, dans ce cas la mémoire 51 est une mémoire sécurisée), une unité de traitement sécurisée 55 équipée par exemple d'un microprocesseur sécurisé et de mesure physiques de protection (protection physique autour de la puce, par treillis, vias, etc. et protection sur les interfaces de transmission de données, éventuellement fusionnée avec l'unité de traitement 52), et pilotée par un programme d'ordinateur 56 spécifiquement dédié à cette unité de traitement sécurisée 55, ce programme d'ordinateur 56 mettant en œuvre tout ou une partie du procédé de traitement tel que précédemment décrit. Le groupe composé de l'unité de traitement sécurisée 55, de la mémoire sécurisée 54 et du programme d'ordinateur dédié 56 constitue le module sécurisé (PS) du dispositif de cartographie mobile. Dans au moins un mode de réalisation, la présente technique est mise en œuvre sous la forme d'un ensemble de programmes installés en partie ou en totalité sur cette portion sécurisée du dispositif de cartographie mobile. Dans au moins un autre mode de réalisation, la présente technique est mise en œuvre sous la forme d'un composant dédié (CpX) pouvant traiter des données des unités de traitement et installé en partie ou en totalité sur la portion sécurisée du dispositif de cartographie mobile. Par ailleurs, le dispositif comprend également des moyens de communication (CIE) se présentant par exemple sous la forme de composants réseaux (Wi-Fi, 3G/4G/5G, filaire, RFID/NFC, Bluetooth, BLE, LPWan, VLC, etc.) qui permettent au dispositif de recevoir des données (I) en provenance d'entités connectées à un ou plusieurs réseaux de communication et des transmettre des données traitées (T) à de telles entités.

Un tel dispositif comprend en outre un système conforme à l'invention comprenant :

- un ensemble comprenant de dispositifs de prise de vue physiquement alignés et répartis dans un même plan horizontal de sorte à couvrir un angle de prise de vue global prédéterminé ;
- un ensemble de capteurs de luminosité physiquement alignés et répartis dans un même plan horizontal de sorte à couvrir l'angle de prise de vue global prédéterminé, chaque capteur de l'ensemble de capteurs étant individuellement connecté à un microcontrôleur
- des moyens de calcul, sous la forme d'un programme implanté sur le microcontrôleur, des paramètres de prise de vue des dispositifs de prise de vue, en fonction des valeurs obtenues à partir des capteurs de luminosité ;

- des moyens de synchronisation des déclenchements des prise de vue en fonction des paramètres de prise de vue implantés.

Ces moyens peuvent être complétés par des moyens de d'éclairage additionnels, éclairant la scène couverte par l'angles de prise vue global et déclenchables, en fonction des valeurs mesurées par les capteurs, selon une fréquence prédéterminée.

**Revendications**

1. Procédé de paramétrage d'un système comprenant un ensemble de N dispositifs de prise de vue (C1, C2, ...) physiquement alignés et répartis dans un même plan horizontal de sorte à couvrir un angle de prise de vue global prédéterminé, procédé comprenant :

    - une étape de mesure (10), à partir d'un ensemble de $N-1$ capteurs de luminosité (A1, A2, ...) physiquement alignés et répartis dans un même plan horizontal de sorte à couvrir l'angle de prise de vue global prédéterminé, chaque capteur de l'ensemble de capteurs étant individuellement connecté à un microcontrôleur $(\mu C)$, d'au moins une donnée représentative de la luminance (W1, W2, ...) perçue par chaque capteur de luminosité ; **caractérisé en ce que** le procédé comprend en outre
    - une étape de détermination (20), par le microcontrôleur $(\mu C)$, à partir des données représentative de la luminance (W1, W2, ...) perçue par chaque capteur de luminosité, d'un temps d'exposition (TE) des N dispositifs de prise de vue ;
    - une étape de paramétrage (30) de l'ensemble des N dispositifs de prise de vue (C1, C2, ...), à l'aide du temps d'exposition (TE), le paramétrage étant effectué par le microcontrôleur $(\mu C)$, auquel chaque dispositif de prise de vue de l'ensemble des N dispositifs de prise de vue est connecté,

    le procédé comprend, pour chaque dispositif de prise de vue, une étape de détermination de la balance des blancs en fonction d'un nombre prédéterminé de triplets de valeurs de température de couleur mes$_R$ mes$_G$ et mes$_B$, consistant à :

        - pour chaque capteur, calculer un triplet de valeurs moyennes M$^i_R$, M$^i_G$ et M$^i_B$, du capteur courant « i », M$^i_R$ correspondant à la valeur moyenne des valeurs de température de couleur mes$_R$ dudit triplet, M$^i_G$ correspondant à la valeur moyenne de valeurs de température de couleur mes$_G$ dudit triplet, M$^i_B$ correspondant à la valeur moyenne de valeurs de température de couleur mes$_B$, dudit triplet ;
- calculer une valeur compilée M$_X$ des moyennes M$^i_X$, et ce pour chaque composante (R, G, B), en fonction des triplets de valeurs moyennes ;
- calculer deux ratios $r_{G/R}$ et $r_{G/B}$ de chaque dispositif de prise de vue « j », selon les formules :

$$r_{j\,G/R} = k_{j\,G/R}\frac{M_R}{M_G} + b_{j\,G/R}$$

et

$$r_{j\,G/B} = k_{j\,G/B}\frac{M_B}{M_G} + b_{j\,G/B}$$

dans lesquelles les coefficients $k_{jG/R}$ et $k_{jG/B}$ et les bais $b_{jG/R}$ et $b_{jG/B}$ sont prédéterminés à l'étalonnage de chaque dispositif de prise de vue.

2. Procédé de paramétrage, selon la revendication 1, dans lequel l'étape de mesure (10) comprend, pour chaque capteur de luminosité du système :

- une étape d'obtention d'un nombre prédéterminé de valeurs d'intensité large bande mes$_W$, dans la longueur d'onde de 400nm à 950nm, représentative de la luminance exprimée proportionnellement en lux ;
- une étape d'obtention du nombre prédéterminé de triplets de valeurs de température de couleur, mes$_R$ mes$_G$ et mes$_B$, exprimée proportionnellement en lux ;
- au moins une étape de transmission de ces valeurs (mes$_W$, mes$_R$ mes$_G$ et mes$_B$) au microcontrôleur *(µC)*.

3. Procédé selon la revendication 1, dans lequel l'étape de détermination d'un temps d'exposition (20) comprend :

- une étape de calcul d'une valeur compilée M$_W$ des données représentatives de la luminance (W1, W2) ;
- une étape de calcul du temps d'exposition t$_e$ selon la formule suivante :

$$t_e = \begin{cases} t \propto \dfrac{1}{M_W} \; si \; t \, < \, T_{max} \\ T_{max} \end{cases}$$

Dans laquelle Tmax est représentatif d'un temps maximal d'exposition prédéterminé.

4. Procédé selon la revendication 3, dans lequel l'étape de calcul de la valeur compilée M$_W$ des données représentatives de la luminance (W1, W2) consiste en un calcul d'une valeur moyenne des données représentatives de la luminance (W1, W2).

5. Procédé selon la revendication 3, dans lequel, postérieurement à l'étape de détermination du temps d'exposition, le procédé comprend une étape d'ajustement d'un gain analogique *g* de chaque dispositif de prise de vue, selon la formule suivante :

$$g \propto \begin{cases} 0 \; si \; t \, < \, T_{max} \\ log_2\left(\dfrac{T_{max}}{M_W}\right) \end{cases}$$

6. Procédé selon la revendication 1, dans lequel l'étape de mesure comprend en outre une étape de détermination d'une fréquence (FL) de la lumière ambiante.

7. Système de caméra panoramique comprenant un ensemble de N dispositifs de prise de vue physiquement alignés et répartis dans un même plan horizontal de sorte à couvrir un angle de prise de vue global prédéterminé, système qui comprend en outre :

- un microcontrôleur *(µC)* ;
- un ensemble de N-1 capteurs de luminosité physiquement alignés et répartis dans un même plan horizontal de sorte à couvrir l'angle de prise de vue global prédéterminé, chaque capteur de l'ensemble de capteurs étant individuellement connecté au microcontrôleur *(µC)* ;

et **caractérisé en ce que** chaque dispositif de prise de vue de l'ensemble des N dispositifs de prise de vue est individuellement connecté au microcontrôleur *(µC)* pour recevoir, de la part de ce microcontrôleur *(µC)* des paramètres de prise de vue déterminés en fonction de données de luminance captées depuis l'ensemble de N-1 capteurs de luminosité et traitées par le microcontrôleur *(µC),* le système étant configuré pour mettre en œuvre le procédé selon la revendication 1.

8. Produit programme d'ordinateur comprenant des instructions de code de programme pour la mise en œuvre d'un procédé de paramétrage selon la revendication 1, lorsqu'il est exécuté par le dispositif selon la revendication 7.

**Patentansprüche**

1. Verfahren zum Parametrieren eines Systems, das eine Gruppe von N Bildaufnahmevorrichtungen (C1, C2, ...) aufweist, die physisch in einer einzigen horizontalen Ebene ausgerichtet und so verteilt sind, dass sie einen vorgegebenen Gesamtbildaufnahmewinkel abdecken, wobei das Verfahren Folgendes aufweist:

- einen Schritt zum Messen (10) mindestens eines Datenelements, das für die Leuchtdichte (W1, W2, ...) steht, die von jedem Helligkeitssensor erfasst wird, ausgehend von einer Gruppe von N-1 Helligkeitssensoren (A1, A2, ...), die physisch in einer einzigen horizontalen Ebene ausgerichtet und so verteilt sind, dass sie den vorgegebenen Gesamtbildaufnahmewinkel abdecken, wobei jeder Sensor der Sensorgruppe einzeln mit einem Mikrocontroller (µC) verbunden ist; **dadurch gekennzeichnet, dass** das Verfahren darüber hinaus Folgendes aufweist:

- einen Schritt zum Bestimmen (20) einer Belichtungszeit (TE) für die N Bildaufnahmevorrichtungen durch den Mikrocontroller (µC) ausgehend von den Daten, die für die Leuchtdichte (W1, W2, ...) stehen, die von jedem Helligkeitssensor erfasst wird;
- einen Schritt zum Parametrieren (30) der Gruppe der N Bildaufnahmevorrichtungen (C1, C2, ...) unter Verwendung der Belichtungszeit (TE), wobei das Parametrieren durch den Mikrocontroller *(µC)* erfolgt, mit dem jede Bildaufnahmevorrichtung der Gruppe der N Bildaufnahmevorrichtungen verbunden ist, wobei das Verfahren für jede Bildaufnahmevorrichtung einen Schritt zum Bestimmen des Weißabgleichs auf der Grundlage einer vorgegebenen Anzahl von Dreiergruppen von Farbtemperaturwerten $mes_R$ $mes_G$ und $mes_B$ aufweist, bestehend aus:

- für jeden Sensor dem Berechnen einer Dreiergruppe von Durchschnittswerten $M^i_R$, $M^i_G$ und $M^i_B$ des aktuellen Sensors "i", wobei $M^i_R$ dem Durchschnittswert der Farbtemperaturwerte $mes_R$ dieser Dreiergruppe entspricht, $M^i_G$ dem Durchschnittswert der Farbtemperaturwerte $mes_G$ dieser Dreiergruppe entspricht und $M^i_B$ dem Durchschnittswert der Farbtemperaturwerte $mes_B$ dieser Dreiergruppe entspricht;
- Berechnen eines kompilierten Werts $M_X$ der Durchschnittswerte $M^i_X$ für jede Komponente (R, G, B) in Abhängigkeit von den Dreiergruppen der Durchschnittswerte;
- Berechnen zweier Verhältnisse $r_{G/R}$ und $r_{G/B}$ für jede Bildaufnahmevorrichtung "j" anhand folgender Formeln:

$$r_{j\,G/R} = k_{j\,G/R} \frac{M_R}{M_G} + b_{j\,G/R}$$

und

$$r_{j\,G/B} = k_{j\,G/B} \frac{M_B}{M_G} + b_{j\,G/B}$$

in denen die Koeffizienten $k_{jG/R}$ und $k_{j\,G/B} \frac{M_B}{M_G}$ und die Messabweichungen $b_{jG/R}$ und $b_{jG/B}$ bei der Kalibrierung jeder Bildaufnahmevorrichtung vorgegeben werden.

2. Verfahren zum Parametrieren nach Anspruch 1, wobei der Schritt zum Messen (10) für jeden Helligkeitssensor des Systems Folgendes aufweist:

- einen Schritt zum Erhalten einer vorgegebenen Anzahl von Werten der Breitbandintensität $mes_W$ im Wellenlängenbereich von 400 nm bis 950 nm, die für die proportional in Lux ausgedrückte Leuchtdichte steht;
- einen Schritt zum Erhalten der vorgegebenen Anzahl von Dreiergruppen von Farbtemperaturwerten $mes_R$ $mes_G$ und $mes_B$, proportional ausgedrückt in Lux;
- mindestens einen Schritt zum Übertragen dieser Werte ($mes_W$, $mes_R$ $mes_G$ und $mes_B$) an den Mikrocontroller (µC).

3. Verfahren nach Anspruch 1, wobei der Schritt zum Bestimmen einer Belichtungszeit (20) Folgendes aufweist:

- einen Schritt zum Berechnen eines kompilierten Werts $M_W$ der Daten, die für die Leuchtdichte (W1, W2) stehen;
- einen Schritt zum Berechnen der Belichtungszeit $t_e$ anhand folgender Formel:

$$t_e = \begin{cases} t \propto \dfrac{1}{M_W} & si\ t < T_{max} \\ T_{max} \end{cases}$$

in der Tmax für eine vorgegebene maximale Belichtungszeit steht.

4. Verfahren nach Anspruch 3, wobei der Schritt zum Berechnen des kompilierten Werts $M_W$ der Daten, die für die Leuchtdichte (W1, W2) stehen, das Berechnen eines Durchschnittswerts der Daten, die für

**5.** Verfahren nach Anspruch 3, wobei das Verfahren nach dem Schritt zum Bestimmen der Belichtungszeit einen Schritt zum Einstellen einer analogen Verstärkung g jeder Bildaufnahmevorrichtung gemäß der folgenden Formel aufweist:

$$ g \propto \begin{cases} 0 \; si \; t \; < \; T_{max} \\ log_2 \left( \dfrac{T_{max}}{M_w} \right) \end{cases} $$

**6.** Verfahren nach Anspruch 1, wobei der Schritt zum Messen darüber hinaus einen Schritt zum Bestimmen einer Frequenz (FL) des Umgebungslichts aufweist.

**7.** Panorama-Kamerasystem, das eine Gruppe von N Bildaufnahmevorrichtungen aufweist, die physisch in einer einzigen horizontalen Ebene ausgerichtet und so verteilt sind, dass sie einen vorgegebenen Gesamtbildaufnahmewinkel abdecken, wobei das System darüber hinaus Folgendes aufweist:

- einen Mikrocontroller $(\mu C)$;
- eine Gruppe von N-1 Helligkeitssensoren, die physisch in einer einzigen horizontalen Ebene ausgerichtet und so verteilt sind, dass sie den vorgegebenen Gesamtbildaufnahmewinkel abdecken, wobei jeder Sensor der Sensorgruppe einzeln mit einem Mikrocontroller $(\mu C)$ verbunden ist; und **dadurch gekennzeichnet, dass** jede Bildaufnahmevorrichtung der Gruppe der N Bildaufnahmevorrichtungen einzeln mit dem Mikrocontroller $(\mu C)$ verbunden ist, um von diesem Mikrocontroller $(\mu C)$ Bildaufnahmeparameter zu erhalten, die auf der Grundlage von Leuchtdichtedaten bestimmt werden, die von der Gruppe von N-1 Helligkeitssensoren erfasst und von dem Mikrocontroller $(\mu C)$ verarbeitet werden, wobei das System so konfiguriert ist, dass es das Verfahren nach Anspruch 1 durchführt.

**8.** Computerprogrammprodukt, das Programmcodeanweisungen zur Durchführung eines Verfahren zum Parametrieren nach Anspruch 1 aufweist, wenn es von der Vorrichtung nach Anspruch 7 ausgeführt wird.

**Claims**

**1.** A method for parameterizing a system including a set of N imaging devices (C1, C2, ...) that are physically aligned and distributed in the same horizontal plane so as to cover a predetermined total imaging angle, wherein the method includes:

- a step of measuring (10), based on a set of *N-1* brightness sensors (A1, A2, ...) that are physically aligned and distributed in the same horizontal plane so as to cover the predetermined total imaging angle, wherein each sensor in the set of sensors is individually connected to a microcontroller $(\mu C)$, at least one datum representative of the luminance (W1, W2, ...) detected by each brightness sensor; **characterized in that** the method further includes
- a step of determining (20), by the microcontroller $(\mu C)$, based on the data representative of the luminance (W1, W2, ...) detected by each brightness sensor, an exposure time (TE) of the N imaging devices;
- a step of parameterizing (30) the set of N imaging devices (C1, C2, ...) using the exposure time (TE), wherein the parameterization is carried out by the microcontroller $(\mu C)$, to which each imaging device of the set of N imaging devices is connected,

wherein the method includes, for each imaging device, a step of determining the white balance as a function of a predetermined number of triplets of colour temperature values $mes_R$, $mes_G$ and $mes_B$, consisting in:

for each sensor, calculating a triplet of average values $M^i_R$, $M^i_G$ and $M^i_B$, for this sensor "i", wherein $M^i_R$ corresponds to the average value of the colour temperature values $mes_R$ of said triplet, $M^i_G$ corresponds to the average value of the colour temperature values $mes_G$ of said triplet, and $M^i_B$ corresponds to the average value of the colour temperature values $mes_B$ of said triplet,

- calculating a compiled value $M_X$ of the averages $M^i_X$, for each component (R, G, B), as a function of the triplets of average values;
- calculating two ratios $r_{G/R}$ and $r_{G/B}$ for each imaging device "j", according to the formulae:

$$ r_{j\,G/R} = k_{j\,G/R} \frac{M_R}{M_G} + b_{j\,G/R} $$

and

$$ r_{j\,G/B} = k_{j\,G/B} \frac{M_B}{M_G} + b_{j\,G/B} $$

wherein the coefficients $k_{jG/R}$ and $k_{jG/B}$ and the biases $b_{jG/R}$ and $b_{jG/B}$ are predetermined during the calibration of each imaging device.

2. A parameterization method according to claim 1, wherein the step of measuring (10) includes, for each brightness sensor of the system:

- a step of obtaining a predetermined number of broadband intensity values $mes_W$, in the wavelength range from 400 nm to 950 nm, representative of the luminance expressed proportionally in lux;
- a step of obtaining the predetermined number of triplets of colour temperature values, $mes_R$, $mes_G$ and $mes_B$, expressed proportionally in lux;
- at least one step of transmitting these values ($mes_W$, $mes_R$, $mes_G$ and $mes_B$) to the microcontroller $(\mu C)$.

3. A method according to claim 1, wherein the step of determining an exposure time (20) includes:

- a step of calculating a compiled value $M_W$ of the data representative of the luminance (W1, W2);
- a step of calculating the exposure time $t_e$ according to the following formula:

$$t_e = \begin{cases} t \propto \dfrac{1}{M_W} \; si \; t < T_{max} \\ T_{max} \end{cases}$$

wherein Tmax is representative of a predetermined maximum exposure time.

4. A method according to claim 3, wherein the step of calculating the compiled value $M_W$ of the data representative of the luminance (W1, W2) consists in a calculation of an average value of the data representative of the luminance (W1, W2).

5. A method according to claim 3, wherein, following the step of determining the exposure time, the method includes a step of adjusting an analogue gain $g$ of each imaging device, according to the following formula:

$$g \propto \begin{cases} 0 \; si \; t < T_{max} \\ log_2 \left( \dfrac{T_{max}}{M_w} \right) \end{cases}$$

6. A method according to claim 1, wherein the measurement step further includes a step of determining a frequency (FL) of the ambient light.

7. A panoramic camera system including a set of N imaging devices that are physically aligned and distributed in the same horizontal plane so as to cover a predetermined total imaging angle, which system further includes:

- a microcontroller $(\mu C)$;
- a set of N-1 brightness sensors that are physically aligned and distributed in the same horizontal plane so as to cover the predetermined total imaging angle, wherein each sensor in the set of sensors is individually connected to the microcontroller $(\mu C)$;

**characterized in that** each imaging device of the set of N imaging devices is individually connected to the microcontroller $(\mu C)$ to receive, from this microcontroller $(\mu C)$, imaging parameters determined as a function of luminance data captured from the set of N-1 brightness sensors and processed by the microcontroller $(\mu C)$, wherein the system is configured to implement the method according to claim 1.

8. A computer program product including program code instructions for implementing a parameterization method according to claim 1, when the method is executed by the device according to claim 7.

Figure 1

Figure 2

**Figure 3**

**Figure 4**

**Figure 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2022086988 A1